# EUROPÄISCHE PATENTSCHRIFT

(11) **EP 2 336 429 B1**
(45) Veröffentlichungstag und Bekanntmachung des Hinweises auf die Patenterteilung: **04.01.2012**
(21) Anmeldenummer: 10075737.6
(22) Anmeldetag: 13.11.2010
(51) Int. Cl.: E02B 17/00, B66B 9/00, F03D 1/00, A47L 1/02, B66B 9/187, E04G 23/00, E06C 7/12

(54) **Vorrichtung zur Nutzung von technischen Geräten im Unterwasserbereich**
Device for using technical devices underwater
Dispositif d'utilisation d'appareils techniques dans le domaine sous-marin

(30) Priorität: 13.12.2009 DE 102009058277
(43) Veröffentlichungstag der Anmeldung: 22.06.2011
(73) Patentinhaber: Stiftung Alfred-Wegener-Institut Für Polar- Und Meeresforschung, 27570 Bremerhaven (DE)
(72) Erfinder: Krone, Roland, 28203 Bremen (DE); Krämer, Philipp, 26121 Oldenburg (DE)

(56) Entgegenhaltungen:
- DE-A1- 1 634 211
- GB-A- 796 365
- US-B1- 6 170 613
- US-B1- 6 640 934

## Beschreibung

Die Erfindung bezieht sich auf eine Vorrichtung zur Nutzung von technischen Geräten im Unterwasserbereich mit zumindest einer sich vertikal von oberhalb der Wasserlinie bis in den Unterwasserbereich erstreckenden Führungsschiene an einem wasserbenetzten Bauwerk und zumindest einem Geräteschlitten mit zumindest einem Laufkörper, der sich gegen die Führungsschiene über Führungsrollen abstützt, und einem Grundkörper mit einem Aufnahmeflansch zur Ankopplung der technischen Geräte.

Offshore-Bauwerke werden zunehmend auch zur Energiegewinnung eingesetzt, siehe Beispiel Windenergieanlagen. Die Aufstellung im oft unzugänglichen Wasserbereich bringt aber zusätzliche Probleme bei der Wartung und Instandhaltung - auch bezüglich Zulieferung von Bau- und Ersatzteilen - solcher Bauwerke. In der Regel werden dafür teure Taucher- oder Kranteams eingesetzt. Deren zumindest teilweiser Ersatz durch konstruktive Lösungen wird deshalb intensiv betrieben.

### STAND DER TECHNIK

Aus der DE 103 08 499 A1 ist es zunächst bekannt, den Zugang zum Turm einer Offshore-Windenergieanlage durch einen unter Wasser liegenden Schleusenbereich von einem U-Boot aus zu ermöglichen. Hierbei handelt es sich aber immer noch um eine sehr kostenintensive Maßnahme.

Weiterhin ist aus der DE 199 21 312 A1 eine Vorrichtung zum Aussetzen und Einholen schwerer meerestechnischer Geräte bekannt, die der Gefahr des Pendelns entgegenwirken soll. Dazu befindet sich außenbords eines Schiffes eine vertikale Schieneneinrichtung mit einem vom Schiffsdeck bis unter die Wasserlinie verfahrbaren Gabelhubschlitten, dessen Gabeln seitlich wegschwenkbar sind. Auf dem Schiffsdeck befindet sich eine horizontale Schieneneinrichtung mit einem Geräteschlitten, auf dem die schweren Messgeräte bis auf den Gabelhubschlitten fahrbar sind. Das Aussetzen bzw. Aufnehmen der schweren Messgeräte im Wasser erfolgt nach dem Verfahren des Gabelhubschlittens bis unter die Wasserlinie dann durch das seitliche Wegschwenken der Gabeln des Gabelhubschlittens. Die vertikale Schieneneinrichtung dient also der präzisen Führung des Messgeräts, Absenk- und Einholvorgang erfolgen über einen Antrieb. Die vorliegende Erfindung geht aus von diesem Dokument.

Aus der EP 0 381 665 A2 ist eine Vorrichtung zur Herstellung von Strängen aus Einzelelementen unter Wasser bekannt, bei der die Einzelelemente zunächst auf einem Geräteschlitten entlang einer vertikalen Schieneneinrichtung auf den Gewässergrund transportiert, dort von einem weiteren Geräteschlitten auf einer horizontalen Schieneneinrichtung übernommen und zu den bereits vormontierten Einzelsegmenten transportiert werden. Eine Vorrichtung für die Montage und den Service von Unterwasserkraftwerken ist aus der DE 10 2008 020 965 A1 bekannt, bei der die Komponenten mit einem verfahrbaren Unterwasserschlitten mit einer Krananlage geliefert werden. Auf dem Unterwasserschlitten ist eine horizontale Schieneneinrichtung zum Nachschub der Komponenten an die Krananlage vorgesehen. Weiterhin ist aus der DE 20310 089 U1 ein Turm einer Windenergieanlage mit einem oberhalb der Wasserlinie horizontal umlaufenden Schienensystem bekannt, in das in einer gewünschten Umfangsposition am Turm ein Gerät eingehängt werden kann.

GB 2 270 664 A offenbart eine Vorrichtung zur Nutzung von technischen Geräten im Unterwasserbereich wobei es sich speziell um eine Verankerungsanlage handelt.

Diese umfasst mehrere sich vertikal von oberhalb der Wasserlinie bis in den Unterwasserbereich erstreckende Führungsschienen, die im gezeigten Ausführungsbeispiel an den Pfosten einer im Wasser stehenden Steganlage befestigt sind. An einem Geräteschlitten befindet sich ein Laufkörper, der sich mit Führungsrollen gegen die Führungsschiene abstützt. Dabei können die Führungsschienen beispielsweise C-förmig ausgebildet sein, sodass sich die Führungsrollen von innen gegen die vorderen C-Schenkel abstützen. Eine I-förmige Ausbildung der Führungsschienen ist ebenfalls möglich. Mit dem Laufkörper ist ein Grundkörper verbunden, der seinerseits einen Aufnahmeflansch für ein Gerät trägt. Im Ausführungsbeispiel ist als Gerät ein Fender offenbart, über den dann ein Boot tiedenunabhängig an der Steganlage gelagert werden kann. Entsprechend der Tiede verfährt der Geräteschlitten auf der vertikalen Führungsschiene, wobei keine Fier- und Hieveinrichtung vorgesehen ist. Die Verfahrbewegung wird ausschließlich über die Bootsbewegung erzeugt. Dabei kann es jedoch aufgrund der Bootsbewegungen, des Auftriebs und der Strömung jedoch zu horizontalen und vertikalen Verkantungen des Laufkörpers des Geräteschlittens in der Führungsschiene kommen. Weiterhin kann die bekannte Vorrichtung nur im Bereich der Wasserlinie arbeiten, da die Verfahrenbewegungen des Geräteschlittens ausschließlich von den Bootsbewegungen erzeugt werden. Ein Verfahren des Geräteschlittens auch in den tieferen Unterwasserbereich ist nicht vorgesehen. Bei einem versehentlichen Absinken des Geräteschlittens mit dem Fender im Wasser führt die Auftriebskraft des Fenders ebenfalls zwangsläufig zu horizontalen und vertikalen Verkantungen des Laufkörpers des Geräteschlittens in der Führungsschiene.

### AUFGABENSTELLUNG

Die AUFGABE für die vorliegende Erfindung ist darin zu sehen, eine verbesserte Vorrichtung anzugeben, die jegliche Verkantung des Laufkörpers des Geräteschlittens in der Führungsschiene weitgehend ausschließt und ein einwandfreies Gleiten ermöglicht. Dabei soll der Geräteschlitten auch in den tieferen Unterwasserbereich abgesenkt und aus diesem wieder eingeholt werden können. Die erfindungsgemäße LÖSUNG für diese Aufgabe ist dem Hauptanspruch zu entnehmen. Vorteilhafte Weiterbildungen der Erfindung werden in den Unteransprüchen aufgezeigt und im Folgenden im Zusammenhang mit der Erfindung näher erläutert.

Die erfindungsgemäße Vorrichtung ist gekennzeichnet durch jeweils eine Andruckeinheit beiderseits des Geräteschlittens mit einem Hebel mit einer Stützrolle an seinem einen Ende und einem Gewichtspaket an seinem anderen Ende. Dabei ist die Abtriebskraft des Gewichtspakets im Wasser größer als die Auftriebskraft des Geräteschlittens. Weiterhin ist der Hebel auf einer Achse im Grundkörper zur Erzeugung einer Andruckkraft des Geräteschlittens an das Bauwerk drehbar gelagert. Diese Andruckkraft des Geräteschlittens wird von dem Gewichtspaket aufgebracht und wirkt über den drehbar gelagerten Hebel und die Stürzrolle auf das Bauwerk. Durch diese erfindungsgemäße Maßnahme wird bei der Erfindung das Auftriebsgewicht des Geräteschlittens unter Wasser, durch das es zu vertikalen Verkantungen des Laufkörpers an der Führungsschiene kommen kann, kompensiert. Horizontale Verkantungen werden bei der Erfindung vermieden durch Vorsehen von zwei Abstandshaltern, die jeweils an ihrem einen Ende an einer Längsseite des Geräteschlittens angeordnet sind und sich mit ihrem anderen Ende am Bauwerk abstützen. Diese Abstandshalter dienen gleichzeitig der Vermeidung übergroßer Krafteinwirkung auf die Führungsschiene. Das Absenken des Geräteschlittens erfolgt über seine Abtriebskraft in Abhängigkeit von der Seilnachgabe der Fier- und Hieveinrichtung. Dadurch kann die Geschwindigkeit des Absenkens bis herunter zum Anhalten genau kontrolliert werden. Das Einholen des Geräteschlittens erfolgt ebenfalls über die Fier- und Hieveinrichtung. Zur lösbaren Verbindung des Geräteschlittens mit der Fier- und Hieveinrichtung ist eine Koppeleinrichtung am Geräteschlitten vorgesehen. Hierbei kann es sich beispielsweise um eine einfache Öse handeln, in die das Seil einer Seilwinde als Fier- und Hieveinrichtung vor dem Absenken des Geräteschlittens eingeklinkt wird.

Zusammenfassend gesehen handelt es sich somit bei der erfindungsgemäßen Vorrichtung zur Nutzung von technischen Geräten im Unterwasserbereich um eine einfache, zuverlässige und einfach zu handhabende Konstruktion, mit der ein Geräteschlitten ohne weiteren Antrieb in größere Unterwassertiefen abgelassen werden kann. Dabei erfolgt eine sichere Führung entlang einer entsprechend am Bauwerk angebrachten einfachen Führungsschiene, sodass ein Abdriften des Geräteschlittens in der Gewässerströmung sicher vermieden ist. Dabei kann die Führungsschiene in einfacher Weise direkt am Bauwerk vorgesehen oder auch nachträglich dort angebracht werden. Weiterhin ist ein sicheres und verkantungsfreies Gleiten des Geräteschlittens durch die oben erläuterten erfindungsgemäßen Maßnahmen garantiert. Ein einfaches Einholen des Geräteschlittens über die Fier- und Hieveinrichtung, beispielsweise eine einfache Seilwinde, entlang der Führungsschiene ist ebenfalls möglich. Mit dem Geräteschlitten können unterschiedlichste Geräte, Werkzeuge und Materialien in den Unterwasserbereich hinabgelassen werden. Je nach Erstreckung der Führungsschiene, die im übrigen auch vorteilhaft als "Handlauf zum Festhalten an den ansonsten in der Regel völlig glatten Unterwasserbauwerken von Tauchern genutzt werden kann, ist eine Verbringung bis auf den Gewässerboden möglich. Ebenfalls ist eine Durchführung von Messungen oder Probennahmen des Wassers oder der Fauna und Flora im Wasser während des Absinkens oder Anhebens des Geräteschlittens möglich, sodass Profilmessungen unterschiedlichster Parameter über die Wassertiefe vorgenommen werden können. Insbesondere in der Umgebung der Pylone von Windkraftanlagen sind beispielsweise regelmäßige Erfassungen der Aufwuchsfauna und technische Kontrollen der Konstruktion vorgeschrieben. Diese Beprobungen und Messungen können mit der Vorrichtung nach der Erfindung völlig automatisiert und absolut reproduzierbar durchgeführt werden. Somit kann die Erfindung Wartungs- und Taucherteams bei der betrieblichen Wartung von Unterwasserbauwerken, beispielsweise den Offshore-Pylonen einer Windenergieanlage, wesentlich unterstützen oder teilweise sogar ersetzen. Da sich die Vorrichtung nach der Erfindung aufgrund ihrer Konstruktion sehr eng an das Bauwerk anschließt, wird auch dessen Umgebung, insbesondere die Strömungsverhältnisse und die Tierwelt, nicht beeinträchtigt.

Es wurde bereits ausgeführt, dass das Absenken des Geräteschlittens aufgrund seines Abtriebsgewichts erfolgt. Über die Hiev- und Fiereinrichtung kann dabei die Absenkgeschwindigkeit nur verringert werden. Eine Beschleunigung ergibt sich hingegen, wenn vorteilhaft Zusatzgewichte am Geräteschlitten vorgesehen sind. Durch die Erschwerung des Geräteschlittens wird außerdem eine Verbesserung der Andruckkraft an das Bauwerk erreicht, sodass Abheben und Verkanten noch besser vermieden werden können.

Weiterhin ist es vorteilhaft, wenn die Vorrichtung eine Ausbildung einer T-förmigen Führungsschiene mit einem Längsschenkel und einem Querschenkel und eine T-förmige Führungsnut im Laufkörper, mit der dieser über die T-förmige Führungsschiene greift, aufweist. Durch den Querschenkel ist damit bereits eine erste Sicherung gegen das Abheben des Geräteschlittens gegeben. Weiterhin können bei einer solchen Ausgestaltung vorteilhaft im Inneren der T-förmigen Führungsnut beiderseits des Längsschenkels die Führungsrollen des Laufkörpers vorgesehen sein. Dabei können diese so angeordnet sein, dass sie paarweise, d.h. gegenüberliegend, entweder am Längsschenkel und/oder am Querschenkel der T-förmigen Führungsschiene abstützen. Somit kann der Laufkörper des Geräteschlittens optimal auf der Führungsschiene gleiten bzw. abrollen und ein Verkanten des Geräteschlittens ist ebenfalls noch weiter vermieden.

Bei der T-förmigen Ausgestaltung von Führungsschiene und Führungsnut im Laufkörper greifen die entsprechenden Flanken der Führungsnut hinter den Querschenkel der Führungsschiene. Ein Aufsetzen des Geräteschlittens auf die Führungsschiene ist daher von deren Ende her möglich. Da aber nicht gewährleistet werden kann, dass das Ende der Führungsschiene auch immer beispielsweise von einem Wartungsschiff aus erreicht werden kann, ist es vorteilhaft, wenn Einführaussparungen im Querschenkel der T-förmigen Führungsschiene zum Einsetzen des Laufkörpers des Geräteschlittens vorgesehen sind. Um ein Einsetzen in unterschiedlichen Höhen zu ermöglichen, beispielsweise in Abhängigkeit von der Bootshöhe bei unterschiedlicher Tiede, können auch mehrere Aussparungen in einem entsprechenden Abstand zueinander vorgesehen sein. Derartige Aussparungen sind besonders einfach anzubringen, wenn es sich bei der Führungsschiene bevorzugt um eine einfache Stahlschiene handelt, die an das Bauwerk angeschraubt oder angeschweißt wird. Ebenfalls eine besonders einfache Materialverwendung ergibt sich, wenn die Abstandshalter zur seitlichen Stabilisierung des Geräteschlittens auf der Führungsschiene und Vermeidung von übergroßer Krafteinwirkung auf die Führungsschiene aus einem einfachen, entsprechend ihrer Abstandsfunktion gebogenen oder gewinkelten Stahlrohr handelt. Damit die Abstandshalter besonders leicht auf dem Bauwerk gleiten und die Bewegung des Geräteschlittens nicht behindern, ist es weiterhin vorteilhaft, wenn an den Abstandshaltern an deren Abstützseite am Bauwerk weitere Stützrollen vorgesehen sind.

Die genannten konstruktiven Maßnahmen bei der Vorrichtung nach der Erfindung dienen dem verkantungsfreien Gleiten des Geräteschlittens auf der Führungsschiene. Damit das Gleiten nicht durch Fremdkörper, insbesondere Bewuchs oder Tierbesatz, auf der Führungsschiene beeinträchtigt wird, ist es weiterhin vorteilhaft, wenn zumindest am unteren Ende des Laufkörpers zur Führungsschiene dicht beabstandete Freiräumnasen vorgesehen sind. Diese arbeiten nach der Art eines Schneeschiebers vor einer Lokomotive. Da unter Wasser ein Besatz oder Bewuchs relativ schnell auftreten kann, ist es weiterhin vorteilhaft, wenn derartige Freiräumnasen auch am oberen Ende des Laufkörpers des Geräteschlittens vorgesehen sind. Dadurch können die Führungsschienen auch beim Hieven des Geräteschlittens freigeräumt werden. Je nach Art des an den Geräteschlitten angebauten Geräts kann dieses Versorgungs- und Datenleitungen ("Kabel") benötigen. Damit diese sich nicht in der Führungsschiene verhaken oder durch die Strömung abgetrieben werden, kann bereits der Geräteschlitten entsprechende Kabelführungselemente aufweisen. Damit die Führung aber auch über eine größere Strecke sicher gewährleistet ist, ist es vorteilhaft, wenn zumindest ein Gleiter oberhalb des Geräteschlittens vorgesehen ist, der an das Kabel fest angekoppelt ist und so ein zu großes Ausbuchten des Kabels oder einer Versorgungsleitung verhindert. Prinzipiell ist der Gleiter mit den laufenden Kabelhaltern bei einer Portalkrananlage vergleichbar. Weiterhin kann der Gleiter konstruktiv prinzipiell analog zum Geräteschlitten bzw. zum Laufkörper ausgestaltet sein. Weiterhin ist es bei der Erfindung auch möglich, zumindest einen zusätzlichen Geräteschlitten unterhalb des Geräteschlittens vorzusehen. Dieser kann dann einen Ansiedelungs- und Erntekorb für Hartbodentiere aufweisen und über einen längeren Zeitraum am Gewässerboden verbleiben. Dazu ist eine lösbare Kopplung mit dem Geräteschlitten erforderlich, über den der zusätzliche Geräteschlitten bei Bedarf wieder eingeholt werden kann. Eine solche lösbare Kopplung kann beispielsweise aus einem Bergedorn mit Absatz am zusätzlichen Geräteschlitten bestehen, der in eine Bergeglocke mit einem hochschiebbaren Absatz am Geräteschlitten bei dessen Absenken einfährt, sodass die Absätze hintereinander lösbar verhaken. Ansonsten ist auch der zusätzliche Geräteschlitten prinzipiell wie der Geräteschlitten konstruktiv ausgestaltet.

Bereits weiter oben wurde ausgeführt, dass der Geräteschlitten die unterschiedlichsten Geräte zur Durchführung unterschiedlichster Arbeiten tragen kann. Grundsätzlich weist der Geräteschlitten einen Aufnahmeflansch zur Aufnahme der technischen Geräte auf. Vorteilhaft ist dabei eine entsprechende Ausbildung des Aufnahmeflansches des Geräteschlittens zur Ankopplung beispielsweise einer Inspektionskamera, eines Probennehmers, eines Messgeräts, einer Kranvorrichtung, einer Lampe, einer Fangeinrichtung oder eines einfachen Lasthakens als technischem Gerät.

Weiterhin können zur weiteren Vereinfachung der Unterwasserarbeiten bei der Vorrichtung nach der Erfindung auch mehrere Führungsschienen nebeneinander am Bauwerk vorgesehen sein. Dadurch kann beispielsweise ein größeres Wasservolumen beprobt werden. Dazu kann ein einzelner Geräteschlitten vorgesehen sein, der zeitlich nacheinander auf die verschiedenen Führungsschienen aufgesetzt wird, es können aber auch mehrere Geräteschlitten vorgesehen sein, die entsprechend parallel arbeiten. Entsprechendes gilt dann für die Hiev- und Fiervorrichtung, wobei in der Regel nur eine Vorrichtung eingesetzt wird, die auf einem Boot oder einer Arbeitsplattform angeordnet ist. Es kann aber speziell bei einem runden Pfeiler auch eine horizontal umlaufende Schiene oberhalb der Wasserlinie vorgesehen sein, in die Fier- und Hieveinrichtung eingehakt und an beliebiger Umfangsposition positioniert werden kann. Grundsätzlich kann es sich bei der Fier- und Hieveinrichtung bevorzugt um eine mechanisch oder elektrisch betätigte Seilwinde als Fier- und Hieveinrichtung handeln, die entweder oberhalb der Wasserlinie am Bauwerk selbst oder auf einer Schwimmeinheit angeordnet ist. Weitere konstruktive Details der Vorrichtung nach der Erfindung sind den nachfolgend beschriebenen Ausführungsbeispielen zu entnehmen.

### AUSFÜHRUNGSBEISPIELE

Die Vorrichtung zur Nutzung von technischen Geräten im Unterwasserbereich nach der Erfindung wird im Folgenden anhand der schematischen, nicht maßstäblichen Figuren noch weitergehend erläutert. Dabei zeigt die
- **FIGUR 1**: in der Perspektive die Vorrichtung mit einem Probennehmer,
- **FIGUR 2**: eine Draufsicht auf die Vorrichtung,
- **FIGUR 3**: einen Querschnitt durch die Vorrichtung im Bereich des Laufkörpers,
- **FIGUR 4**: einen Längsschnitt durch die Vorrichtung im Bereich des unteren Laufkörpers,
- **FIGUR 5**: im Querschnitt die Vorrichtung mit einer Bergungsglocke und einem weiteren Geräteschlitten und
- **FIGUR 6**: im Querschnitt die Vorrichtung mit einer Videokamera und einem zusätzlichen Geräteschlitten.

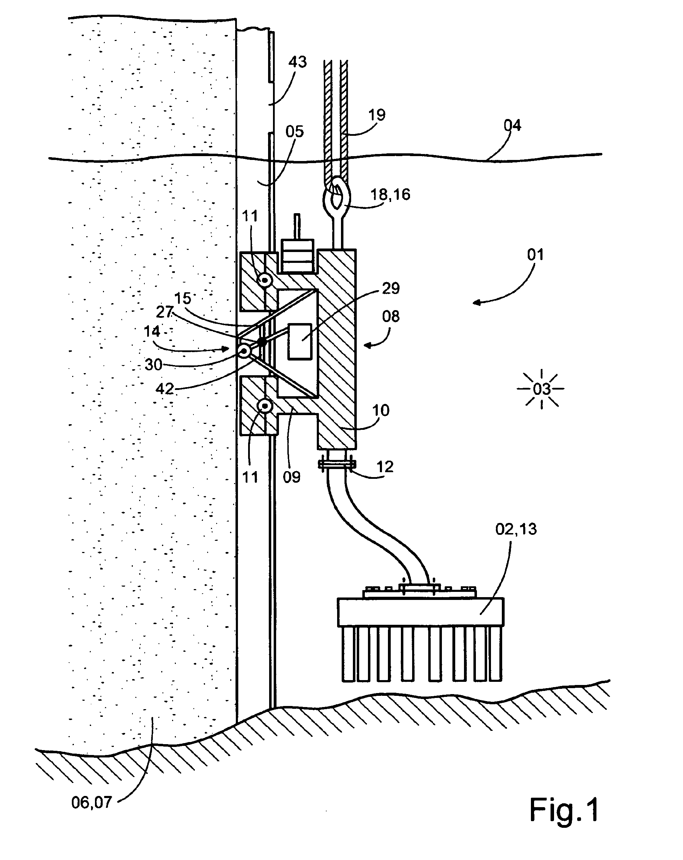

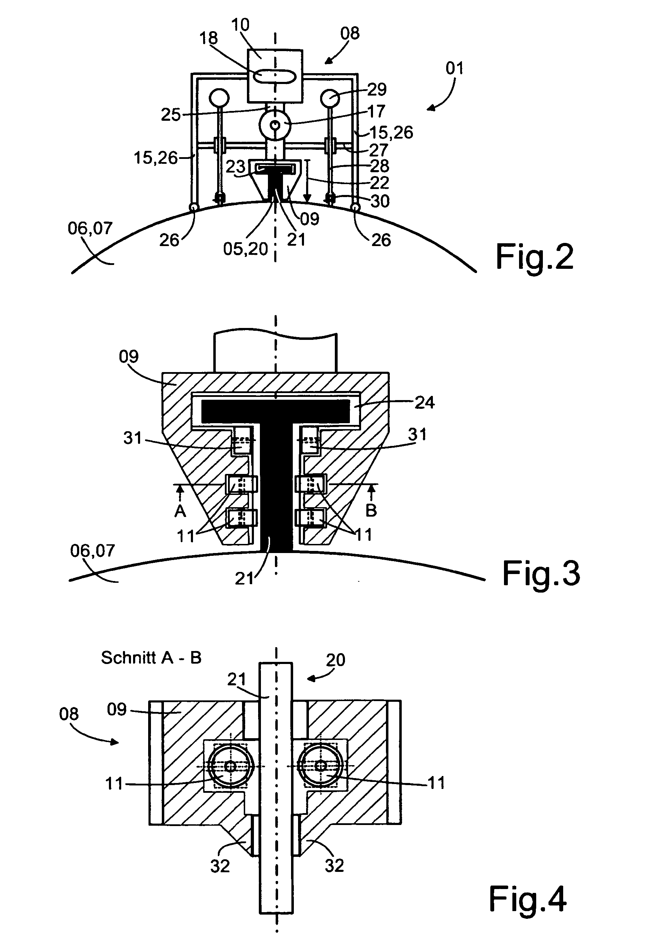

In der **FIGUR 1** ist eine Vorrichtung **01** nach der Erfindung zur Nutzung eines technischen Geräts **02** im Unterwasserbereich **03** gezeigt. Die Vorrichtung **01** umfasst eine sich vertikal von oberhalb der Wasserlinie **04** bis in den Unterwasserbereich **03** erstreckenden Führungsschiene **05,** die an einem wasserbenetzten Bauwerk **06,** im ausgeführten Beispiel ein Pylon **07** einer Offshore-Windkraftanlage, angeordnet ist, und einen Geräteschlitten **08.** Dieser besteht im dargestellten Ausführungsbeispiel aus zwei Laufkörpern **09** und einem Grundkörper **10** (hier mit eckigem Querschnitt). Die Laufkörper **09** stützen sich über Führungsrollen **11** (gestrichelt dargestellt) gegen die Führungsschiene **05** ab (vergleiche auch **FIGUR 3**). Der Grundkörper **10** weist einen Aufnahmeflansch **12** auf. Im gezeigten Ausführungsbeispiel ist daran ein Probennehmer **13** zur Aufnahme von Wasserproben als technisches Gerät **02** mittels Verschraubung angekoppelt. Weiterhin sind in der **FIGUR 1** Andruckeinheiten **14,** Abstandshalter **15** und Zusatzgewichte **17** zur Stabilisierung des Geräteschlittens **08** dargestellt, die in **FIGUR 2** näher erläutert werden. Schließlich ist in **FIGUR 1** noch eine Koppeleinrichtung **18** in Form einer Öse **16** zur Befestigung eines Hiev- und Fierseiles **19** einer nicht weiter dargestellten, oberhalb der Wasserlinie **04** angeordneten Hiev- und Fiereinrichtung dargestellt, bei der es sich entsprechend um eine Seilwinde handeln kann.

Auf die Führungsschiene **05** kann der Geräteschlitten **08** entweder vom oberen Ende der Führungsschiene **05** her oder, wenn dieses Ende beispielsweise von einem Boot aus nicht zuverlässig zu erreichen ist, über Einführaussparungen **43,** die oberhalb der Wasserlinie **04** angeordnet sind. Bei einer T-förmigen Führungsschiene **20** (siehe unten) wird entsprechend der Querschenkel **23** ausgespart, sodass nur der Längsschenkel **21** im Bereich der Einführaussparungen **43** stehen bleibt. Zum Aufsetzen des Geräteschlittens **08** in verschiedenen Höhen können mehrere Einführaussparungen **43** mit Abstand zueinander übereinander in der Führungsschiene **05** vorgesehen sein.

In der **FIGUR 2** ist ein Querschnitt durch die Vorrichtung **01** gezeigt. Zu erkennen sind das Bauwerk **06,** an welchem die Führungsschiene **05,** im gezeigten Ausführungsbeispiel eine T-förmige Führungsschiene **20** mit einem Längsschenkel **21** und einem Querschenkel **23,** befestigt ist. Der Laufkörper **09** des Geräteschlittens **08** greift mit einer T-förmigen Führungsnut **24** über die T-förmige Führungsschiene **20.** Diese Anordnung hat eine Bautiefe **22** von ca. 20 cm und liegt damit sehr nah am Bauwerk **06** an, sodass sie nicht weiter stört. Der Grundkörper **10** trägt an stabilen Querträgern **25** die Laufkörper **09.** Dargestellt sind noch die Zusatzgewichte **17** auf dem oberen Querträger **25** und die Koppelvorrichtung **18** am oberen Ende des Grundkörpers **10.** Weiterhin sind zwei Abstandshalter **15** zur seitlichen Stabilisierung des Geräteschlittens **08** auf der Führungsschiene **05** und Vermeidung übergroßer Krafteinwirkung auf die Führungsschiene **05** dargestellt, die mit ihrem einen Ende am Grundkörper **10** befestigt sind. Mit ihrem anderen Ende stützen sie sich über Stützrollen **26** am Bauwerk **06** ab. Im gewählten Ausführungsbeispiel bestehen die Abstandshalter **15** aus trapezförmig abgewinkelten Stahlrohren **26.** Zwischen diesen ist an Querachsen **42** eine Längsachse **27** befestigt, auf der Hebel **28** drehbar gelagert sind. Diese Hebel **28** weisen an ihrem einen Ende ein Gewichtspaket **29** und an ihrem anderen Ende eine Stützrolle **30** auf. Dabei ist die Abtriebskraft des Gewichtspakets **29** größer als die Auftriebskraft des Geräteschlittens **08,** sodass vom Gewichtspaket **29** über den Hebel **28** und die Stützrolle **30** eine Andruckkraft des Geräteschlittens **08** an das Bauwerk **06** erzeugt wird, wodurch das Problem des Abhebens und Verkantens des Geräteschlittens **08** aufgrund seiner Auftriebskraft wesentlich verringert wird.

In der **FIGUR 3** ist ein Querschnitt durch den Laufkörper **09** im Bereich der Führungsrollen **11** dargestellt. Zu erkennen sind vier paarweise in der T-förmigen Führungsnut **24** angeordnete Führungsrollen **11,** die sich am Längsschenkel **21** der T-förmigen Führungsschiene **20** abstützen. Weiterhin sind zwei Führungsrollen **31** in der T-förmigen Führungsnut **24** vorgesehen, die sich am Querschenkel **23** der T-förmigen Führungsschiene **20** abstützen, wodurch ein gleichmäßiges, verkantungsfreies Gleiten des Laufkörpers 09 auf der T-förmigen Führungsschiene **20** erreicht wird.

Die **FIGUR 4** zeigt einen Schnitt **AB** durch die Führungsrollen **11** in **FIGUR 3**. Zu Erkennen sind der Längsschenkel **21** der T-förmigen Führungsschiene **20** und der Laufkörper **09** mit den beiden Führungsrollen **11.** Weiterhin sind im unteren Bereich des Laufkörpers **09** zwei Freiräumnasen **32** dargestellt, die beim Absenken des Geräteschlittens **08** die T-förmige Führungsschiene 20 von Fauna- und Flora-Besatz freiräumen. Analog können auch am oberen Ende des Laufkörpers **09** Freiräumnasen vorgesehen sein, die die T-förmige Führungsschiene **20** beim Hieven des Geräteschlittens **08** freiräumen.

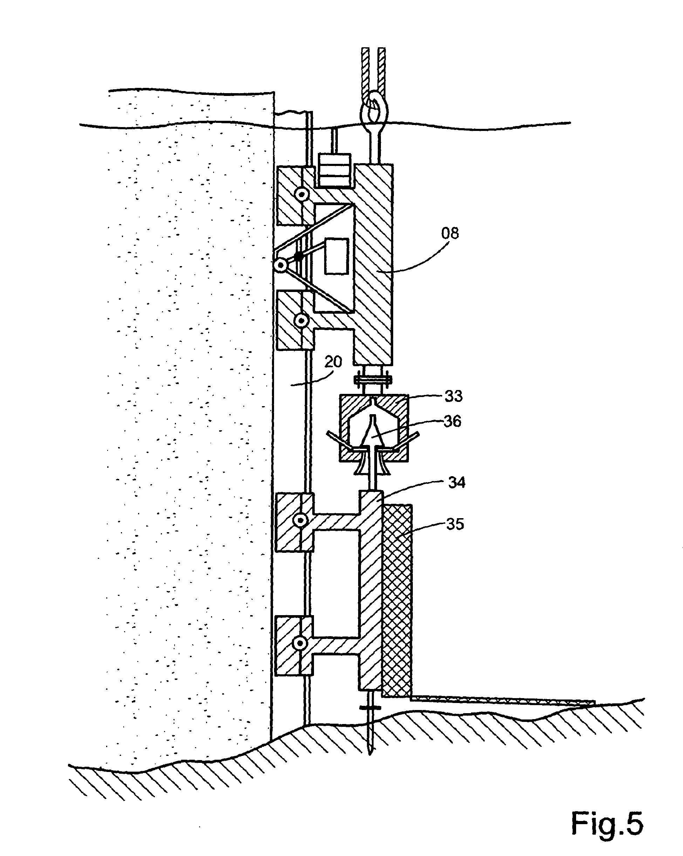

Die **FIGUR 5** zeigt den Geräteschlitten **08** mit einer Bergungsglocke **33** zum Ankoppeln an einen zusätzlichen Geräteschlitten **34,** er beispielsweise einen Ansiedelungs- und Erntekorb **35** zur Ansiedelung und zum Fang von Hartbodentieren trägt und über einen längeren Zeitraum auf dem Gewässerboden verbleiben kann. Dazu wird der zusätzliche Geräteschlitten **34** ohne den Geräteschlitten **08** einfach an der Führungsschiene **20** abgesenkt. Zum Einholen erfolgt dann eine Kopplung an den dann ebenfalls abgesenkten Geräteschlitten **08** über die Bergungsglocke **33,** in die ein Bergungsdorn **36** lösbar einfädelt und einrastet, sodass der zusätzliche Geräteschlitten **34** zusammen mit dem Geräteschlitten **08** wieder eingeholt werden kann.

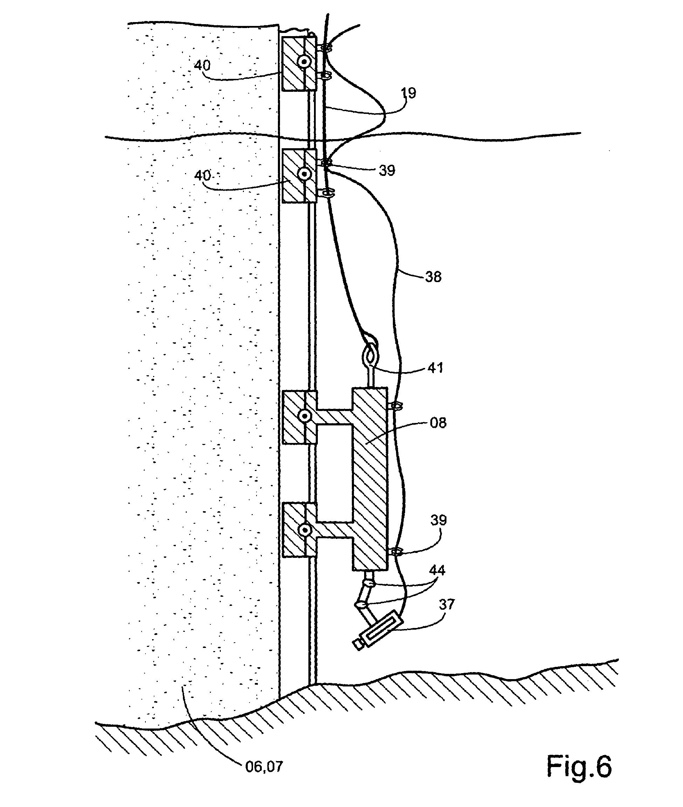

In der **FIGUR 6** ist der Geräteschlitten **08** mit einer Videokamera **37,** beispielsweise zur Begutachtung des Bauwerks **06, 07** dargestellt. Dabei ist die Videokamera **37** zur optimalen Ausrichtung durch Vorsehen von Gelenken **44** mehrfach gelenkig gelagert. Ein Versorgungs- und Datenkabel **38** der Videokamera **37** ist in Kabelführungselementen **39** auf im gewählten Ausführungsbeispiel zwei Gleitern **40** fest gelagert und geführt, damit es nicht zu Behinderungen oder Beschädigungen kommt. Dabei wird das Versorgungs- und Datenkabel **38** in Schlaufen angeordnet, um übergroße Zugbelastung zu vermeiden. In den Kabelführungselementen **39** kann auch das Hiev- und Fierseil **19** des Geräteschlittens **08** befestigt und geführt werden.

### BEZUGSZEICHENLISTE

- **01**: Vorrichtung
- **02**: technisches Gerät
- **03**: Unterwasserbereich
- **04**: Wasserlinie
- **05**: Führungsschiene
- **06**: wasserbenetztes Bauwerk
- **07**: Pylon
- **08**: Geräteschlitten
- **09**: Laufkörper
- **10**: Grundkörper
- **11**: Führungsrolle
- **12**: Aufnahmeflansch
- **13**: Probennehmer
- **14**: Andruckeinheit
- **15**: Abstandshalter
- **16**: Öse
- **17**: Zusatzgewicht
- **18**: Koppeleinrichtung
- **19**: Hiev- und Fierseil
- **20**: T-förmige Führungsschiene
- **21**: Längsschenkel von 20
- **22**: Bautiefe
- **23**: Querschenkel von 20
- **24**: T-förmige Führungsnut
- **25**: Querträger von 10
- **26**: Stahlrohr
- **27**: Längsachse
- **28**: Hebel
- **29**: Gewichtspaket

## Patentansprüche

1. Vorrichtung (01) zur Nutzung von technischen Geräten (02) im Unterwasserbereich (03), mit zumindest einer, im montierten Zustand an einem wasserbenetzten Bauwerk (06), sich vertikal von oberhalb der Wasserlinie (04) bis in den Unterwasserbereich (03) erstreckenden Führungsschiene (05) und zumindest einem Geräteschlitten (08) mit zumindest einem Laufkörper (09), der sich gegen die Führungsschiene (05) über Führungsrollen (11) abstützt, einem Grundkörper (10) mit einem Aufnahmeflansch (12) zur Ankopplung der technischen Geräte (02), und einer Fier- und Hieveinrichtung (19) zum kontrollierten Ausbringen und Einholen des Geräteschlittens (08) und eine Koppeleinrichtung (18) zur lösbaren Verbindung des Geräteschlittens (08) mit der Fier- und Hieveinrichtung,
**GEKENNZEICHNET DURCH**
• jeweils eine Andruckeinheit (14) beiderseits des Geräteschlittens (08) mit einem Hebel (28) mit einer Stützrolle (30) an seinem einen Ende und einem Gewichtspaket (29), dessen Abtriebskraft im Wasser größer als die Auftriebskraft des Geräteschlittens (08) ist, an seinem anderen Ende, wobei der Hebel (28) auf einer Achse (27) im Geräteschlitten (08) zur Erzeugung einer Andruckkraft des Geräteschlittens (08) an das Bauwerk (06) drehbar gelagert ist,
• zumindest zwei Abstandshalter (15), die jeweils an ihrem einen Ende am Geräteschlitten (08) angeordnet sind und sich mit ihrem anderen Ende bei der Verwendung am Bauwerk (06) abstützen.

2. Vorrichtung (01) nach Anspruch 1,
**GEKENNZEICHNET DURCH**
Zusatzgewichte (17) am Geräteschlitten (08).

3. Vorrichtung (01) nach Anspruch 1,
**GEKENNZEICHNET DURCH**
eine T-förmige Führungsschiene (20) mit einem Längsschenkel (21) und einem Querschenkel (23) und eine T-förmige Führungsnut (24) im Laufkörper (09), mit der dieser über die T-förmige Führungsschiene (20) greift, wobei im Inneren der T-förmigen Führungsnut (24) beiderseits des Längsschenkels (21) Führungsrollen (11) mit einer paarweisen Abstützung am Längsschenkel (21) und/oder Führungsrollen (31) mit einer paarweisen Abstützung am Querschenkel (23) der T-förmigen Führungsschiene (20) angeordnet sind.

4. Vorrichtung (01) nach Anspruch 3,
**GEKENNZEICHNET DURCH**
Einführaussparungen (43) im Querschenkel (23) der T-förmigen Führungsschiene (20) zum Aufsetzen des Laufkörpers (09) des Geräteschlittens (08).

5. Vorrichtung (01) nach Anspruch 3,
**GEKENNZEICHNET DURCH**
eine gerade Stahlschiene als Führungsschiene (05) und ein abgewinkeltes gebogenes Stahlrohr oder trapezförmiges Stahlblech als Abstandshalter (15).

6. Vorrichtung (01) nach Anspruch 1,
**GEKENNZEICHNET DURCH**
weitere Stützrollen (30) an den Abstandshaltern (15) auf der Abstützseite am Bauwerk (06).

7. Vorrichtung (01) nach Anspruch 1,
**GEKENNZEICHNET DURCH**
zur Führungsschiene (05) dicht beabstandete Freiräumnasen (32) zumindest am unteren Ende des Laufkörpers (09).

8. Vorrichtung (01) nach Anspruch 1,
**GEKENNZEICHNET DURCH**
zumindest einen Gleiter (40) oberhalb des Geräteschlittens (08) mit zumindest einem Kabelführungselement (39).

9. Vorrichtung (01) nach Anspruch 1,
**GEKENNZEICHNET DURCH**
zumindest einen zusätzlichen Geräteschlitten (34) unterhalb des Geräteschlittens (08) mit einem Ansiedelungs- und Erntekorb (35) für Hartbodentiere und einer lösbaren Kopplung an den Geräteschlitten (08).

10. Vorrichtung (01) nach Anspruch 1,
**GEKENNZEICHNET DURCH**
eine Ausbildung des Aufnahmeflansches (12) des Geräteschlittens (08) zur Ankopplung einer Videokamera (37), eines Probennehmer (13), eines Messgeräts, einer Kranvorrichtung, einer Lampe, einer Fangeinrichtung oder eines einfachen Lasthakens als technischem Gerät.

11. Vorrichtung (01) nach Anspruch 1,
**GEKENNZEICHNET DURCH**
eine parallele Anordnung von mehreren Führungsschienen (05) nebeneinander am Bauwerk (06).

12. Vorrichtung (01) nach Anspruch 11
**GEKENNZEICHNET DURCH**
eine zeitlich sequenzielle Zuordnung einer einzelnen Fier- und Hieveinrichtung und eines Geräteschlittens (08) zu mehreren Führungsschienen (05).

13. Vorrichtung (01) nach Anspruch 1,
**GEKENNZEICHNET DURCH**
eine mechanisch oder elektrisch betätigte Seilwinde als Fier- und Hieveinrichtung (19) mit einer Anordnung oberhalb der Wasserlinie (04) am Bauwerk (06) oder auf einer Schwimmeinheit.

## Claims

1. An apparatus (01) for using technical devices (02) in the underwater zone (03), with at least one guide rail (05) which in its installed state on a water-wetted structure (06) extends vertically from above the water line (04) to the underwater zone (03), and with at least one device slide (08) with at least one mobile body (09) which is supported against the guide rail (05) by way of guide rollers (11); a base body (10) with a reception flange (12) for coupling the technical devices (02); and a lowering device and hoisting device (19) for the controlled deployment and retrieval of the device slide (08); and a coupling device (18) for the detachable connection of the device slide (08) to the lowering device and hoisting device (19),
**characterised by**
• in each case a pressure module (14) on both sides of the equipment slide (08) with a lever (28) with a supporting roller (30) at one end, and a stack of weights (29) at the other end, with the downward force in the water of said stack of weights (29) exceeding the upward force of the equipment slide (08), wherein the lever (28) is pivotally held on an axis (27) in the device slide (08) for generating a contact force of the device slide (08) against the structure (06);
• at least two spacers (15) which in each case on one end are arranged on the device slide (08) and on the other end are supported on the structure (06) during use.

2. The apparatus (01) according to claim 1,
**characterised by**
additional weights (17) on the device slide (08).

3. The apparatus (01) according to claim 1,
**characterised by**
a T-shaped guide rail (20) with a longitudinal leg (21) and a transverse leg (23) and a T-shaped guide groove (24) in the mobile body (09), by means of which guide groove (24) said mobile body (09) grips the T-shaped guide rail (20), wherein in the interior of the T-shaped guide groove (24) on both sides of the longitudinal limb (21) guide rollers (11) with paired support on the longitudinal limb (21) and/or guide rollers (31) with paired support on the transverse limb (23) of the T-shaped guide rail (20) are arranged.

4. The apparatus (01) according to claim 3,
**characterised by**
insertion recesses (43) in the transverse limb (23) of the T-shaped guide rail (20) for placement of the mobile body (09) of the device slide (08).

5. The apparatus (01) according to claim 3,
**characterised by**
a straight steel rail as a guide rail (05) and an angled curved steel pipe or a trapezoidal steel sheet as a spacer (15).

6. The apparatus (01) according to claim 1,
**characterised by**
further support rollers (30) on the spacers (15) on the support side on the structure (06).

7. The apparatus (01) according to claim 1,
**characterised by**
clearing lugs (32), which are closely spaced apart from the guide rail (05), at least at the lower end of the mobile body (09).

8. The apparatus (01) according to claim 1,
**characterised by**
at least one slider (40) above the device slide (08) with at least one cable guide element (39).

9. The apparatus (01) according to claim 1,
**characterised by**
at least one additional device slide (34) below the device slide (08) with an establishment basket and harvesting basket (35) for hard-floor organisms and a detachable coupling to the device slide (08)

10. The apparatus (01) according to claim 1,
**characterised by**
a design of the receiving flange (12) of the device slide (08) for coupling a video camera (37), a sampling device (13), a measuring device, a crane device, a light, a catching device or a simple load hook as a technical device.

11. The apparatus (01) according to claim 1,
**characterised by**
a parallel arrangement of several guide rails (05) side-by-side on the structure (06).

12. The apparatus (01) according to claim 1,
**characterised by**
a time-sequence allocation of an individual lowering device and hoisting device and of a device slide (08) to several guide rails (05).

13. The apparatus (01) according to claim 1,
**characterised by**
a mechanically or electrically operated winch as a lowering device and hoisting device (19) with an arrangement above the water line (04) on the structure (06) or on a floating unit.

## Revendications

1. Dispositif (01) pour utiliser des appareils techniques (02) sous l'eau (03), comprenant au moins un rail de guidage (05) s'étendant verticalement, dans l'état monté sur une construction imprégnée d'eau (06), d'au-dessus de la ligne de flottaison (04) jusque sous l'eau (03), et au moins un chariot d'appareil (08) comprenant au moins un corps de roulement (09) qui s'appuie contre le rail de guidage (05) via des rouleaux de guidage (11), un corps de base (10) avec une bride de réception (12) pour raccorder les appareils techniques (02), et un dispositif de filage et de halage (19) pour l'installation et la récupération contrôlées du chariot d'appareil (08), et un dispositif de couplage (18) pour la liaison séparable du chariot d'appareil (08) d'avec le dispositif de filage et de halage (19),
**caractérisé par**
• une unité de pression (14) respective de chaque côté du chariot d'appareil (08) comprenant un levier (28) avec un rouleau d'appui (30) sur une extrémité, et des poids (29) dont la force descensionnelle dans l'eau est supérieure à la force de poussée verticale du chariot d'appareil (08) sur son autre extrémité, sachant que le levier (28) est disposé de manière rotative sur un axe (27) dans le chariot d'appareil (08) pour produire une force de pression du chariot d'appareil (08) sur la construction (06),
• au moins deux écarteurs (15) qui sont disposés respectivement sur le chariot d'appareil (08) par une extrémité et qui en utilisation, s'appuient par leur autre extrémité sur la construction (06).

2. Dispositif (01) selon la revendication 1,
**caractérisé par**
des poids supplémentaires (17) sur le chariot d'appareil (08) .

3. Dispositif (01) selon la revendication 1,
**caractérisé par**
un rail de guidage en T (20) avec une branche longitudinale (21) et un branche transversale (23) et une rainure de guidage en T (24) dans le corps de roulement (09) avec laquelle celui-ci se met en prise via le rail de guidage en T (20), sachant qu'à l'intérieur de la rainure de guidage en T (24), des deux côtés de la branche longitudinale (21), des rouleaux de roulement (11) s'appuyant par paires sont disposés sur la branche longitudinale (21), et/ou des rouleaux de roulement (31) s'appuyant par paires sont disposés sur la branche transversale (23), du rail de guidage en T (20).

4. Dispositif (01) selon la revendication 3,
**caractérisé par**
des évidements d'introduction (43) dans la branche transversale (23) du rail de guidage en T (20) pour mettre en place le corps de roulement (09) du chariot d'appareil (08).

5. Dispositif (01) selon la revendication 3,
**caractérisé par**
un rail droit en acier en tant que rail de guidage (05) et un rail en acier coudé ou une tôle d'acier en trapèze en tant qu'écarteur (15).

6. Dispositif (01) selon la revendication 1,
**caractérisé par**
des rouleaux d'appui supplémentaires (30) sur les écarteurs (15) sur le côté d'appui sur la construction (06).

7. Dispositif (01) selon la revendication 1,
**caractérisé par**
des ergots d'espace libre (32) au moins sur l'extrémité inférieure du corps de roulement (09), écartés de manière compacte par rapport au rail de guidage (05).

8. Dispositif (01) selon la revendication 1,
**caractérisé par**
au moins un patin (40) au-dessus du chariot d'appareil (08) comprenant au moins un élément de guidage de câble (39).

9. Dispositif (01) selon la revendication 1,
**caractérisé par**
au moins un chariot d'appareil supplémentaire (34) au-dessous du chariot d'appareil (08), comprenant un panier d'implantation et de récolte (35) pour des animaux de sol dur et un couplage séparable au chariot d'appareil (08).

10. Dispositif (01) selon la revendication 1,
**caractérisé par**
une formation de la bride de réception (12) du chariot d'appareil (08) pour raccorder une caméra vidéo (37), un échantillonneur (13), un appareil de mesure, un dispositif de grue, une lampe, un dispositif de piégeage ou un crochet de levage simple comme appareil technique.

11. Dispositif (01) selon la revendication 1,
**caractérisé par**
un agencement parallèle de plusieurs rails de guidage (05) l'un à côté de l'autre sur la construction (06).

12. Dispositif (01) selon la revendication 11,
**caractérisé par**
une attribution temporellement séquentielle d'un seul dispositif de filage et de halage et d'un chariot de guidage (08) à plusieurs rails de guidage (05).

13. Dispositif (01) selon la revendication 11,
**caractérisé par**
un treuil actionné mécaniquement ou électriquement en tant que dispositif de filage et de halage (19) comprenant un agencement au-dessus de la ligne de flottaison (04) sur la construction (06) ou sur une unité de nage.
